# EUROPÄISCHE PATENTSCHRIFT

(11) **EP 3 014 237 B1**
(45) Veröffentlichungstag und Bekanntmachung des Hinweises auf die Patenterteilung: **27.03.2019**
(21) Anmeldenummer: 14732212.7
(22) Anmeldetag: 24.06.2014
(51) Int. Cl.: G01L 25/00, B25J 13/08, B25J 9/16

(54) **VERFAHREN ZUM NULLPUNKTABGLEICHEN EINES DREHMOMENTSENSORS AN EINEM MANIPULATOR**
METHOD FOR ADJUSTING THE ZERO POINT OF A TORQUE SENSOR RELATIVE TO A MANIPULATOR
PROCÉDÉ POUR AJUSTER À ZÉRO UN CAPTEUR DE COUPLE DE ROTATION SUR UN MANIPULATEUR

(30) Priorität: 27.06.2013 DE 102013212433
(43) Veröffentlichungstag der Anmeldung: 04.05.2016
(73) Patentinhaber: KUKA Deutschland GmbH, 86165 Augsburg (DE)
(72) Erfinder: TSCHARNUTER, Dietmar, 86316 Friedberg (DE); NITZ, Gernot, 86368 Gersthofen (DE)
(74) Vertreter: Ege Lee & Partner Patentanwälte PartGmbB
(86) Internationale Anmeldenummer: PCT/EP2014/063253
(87) Internationale Veröffentlichungsnummer: WO 2014/206974

(56) Entgegenhaltungen:
- DONGHAI MA ET AL: "Gravity based autonomous calibration for robot manipulators", ROBOTICS AND AUTOMATION, 1994. PROCEEDINGS., 1994 IEEE INTERNATIONAL C ONFERENCE ON SAN DIEGO, CA, USA 8-13 MAY 1994, LOS ALAMITOS, CA, USA,IEEE COMPUT. SOC, 8. Mai 1994 (1994-05-08), Seiten 2763-2768, XP010097337, DOI: 10.1109/ROBOT.1994.350919 ISBN: 978-0-8186-5330-8
- SIDDHARTH R CHHATPAR: "Experiments in Force-Guided Robotic Assembly", THESIS CASE WESTERN RESERVE UNIVERSITY, XX, XX, 1. Januar 1999 (1999-01-01), Seiten 3-95, XP002345323,
- E. SCHMITZ: "Modeling and control of a planar manipulator with an elastic forearm", PROCEEDINGS, 1989 INTERNATIONAL CONFERENCE ON ROBOTICS AND AUTOMATION, 1. Januar 1989 (1989-01-01), Seiten 894-899, XP055141019, DOI: 10.1109/ROBOT.1989.100095
- SATO Y ET AL: "Micro-G emulation system using constant-tension suspension for a space manipulator", PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US, Bd. CONF. 7, 9. April 1991 (1991-04-09), Seiten 1893-1900, XP010024033, DOI: 10.1109/ROBOT.1991.131902 ISBN: 978-0-8186-2163-5
- Richard M. Voyles ET AL: "The Shape from Motion Approach to Rapid and Precise Force/Torque Sensor Calibration", , 31 December 1997 (1997-12-31), XP055361698, Retrieved from the Internet: URL:https://pdfs.semanticscholar.org/a167/ 546f2aefe1814bb37b887ae4e819e61c203a.pdf [retrieved on 2017-04-04]
- SHIMANO B ET AL: "On Force Sensing Information and Its Use in Controlling Manipulators", 9TH PROCEEDINGS OF THE INTERNATIONAL SYMPOSIUM ON INDUSTRIAL ROBOTS, WASHINGTON, WASH., USA; 1979.03.13-15, SOCIETY OF MANUFACTURING ENGINEERS CORPORATION, ROBOT INSTITUTE OF AMERICA CORPORATION, US, 1 January 1979 (1979-01-01), pages 119-126, XP008184080, ISBN: 0-87263-048-X

## Beschreibung

Die Erfindung betrifft ein Verfahren zum Nullpunktabgleichen eines Drehmomentsensors an einem Manipulator, der mehrere über Gelenke verbundene Glieder aufweist, wobei wenigstens ein mittels eines Antriebs bewegliches Gelenk ein erstes Glied des Manipulators mit einem zweiten Glied des Manipulators drehbar verbindet und an dieses Gelenk wenigstens ein Drehmomentsensor gekoppelt ist, welcher wenigstens einen drehmomentabhängigen Messwert liefert.

DONGHAI MA ET AL "Gravity Based Autonomous Calibration for Robot Manipulators", 1994 IEEE International Conference on San Diego, beschreibt ein Verfahren zum Auffinden der Schwerkraftrichtung. Um die gesuchte Schwerkraftrichtung erhalten zu können, ist demgemäß eine Kalibrierung des Drehmomentsensors durchzuführen und zwar dadurch, dass während einer Drehung des betreffenden Gelenks der sinusförmige Zusammenhang von Drehmoment und Drehwinkel rechnerisch ausgewertet wird. Die Erzeugung eines sinusförmigen Zusammenhangs von Drehmoment und Drehwinkel setzt dabei voraus, dass an dem bewegten Gelenk eine Masse an den sich drehenden Roboterarm bekannter Größe angehängt wird.

SIDDHARTH R. CHHATPAR "Experiments in Force-Guided Robotic Assembly", Thesis Case Western Reserve University, January 1999, beschreibt, dass ein Gelenk mit einer von der Schwerkraft beeinflussten Last beaufschlagt wird. Alle sonstigen Gelenke werden gesperrt. Das Sperren aller sonstigen Gelenke hat zur Folge, dass das von der auf den Roboterarm aufgebrachten Last induzierte Drehmoment vollständig an das eine Gelenk weitergeleitet wird. An diesem Gelenk wird dann das von der aufgebrachten Last induzierte Drehmoment gemessen und anschließend rechnerisch wieder abgezogen.

RICHARD M. VOYLES ET AL. "The Shape from Motion Approach to Rapid and Precise Force/Torque Sensor Calibration" und SHIMANO B ET AL. "On Force Sensing Information and Its Use in Controlling Manipulators" beschreiben jeweils ein Verfahren zum Kalibrieren von Kraft-/Momentsensoren, bei dem der Kraft-/Momentsensor an einem Handgelenk eines Roboterarms angeordnet ist und eine Kalibrierung in zwei Handstellungen durchgeführt wird und zwar gerade nach oben zeigend und gerade nach unten zeigend, wobei die beiden so erhaltenen Messwerte gemittelt werden.

Aus der WO 2009/083111 A1 ist ein Verfahren zum Überwachen von Momenten an einem Roboter bekannt, der mindestens zwei Gelenke und über jeweils mindestens ein Gelenk relativ zueinander bewegliche Teile aufweist. Darin ist mindestens ein Momente erfassender Sensor an mindestens einem beweglichen Teil beschrieben, wobei Sensorkomponenten des Sensors zur redundanten Erfassung eines Moments ausgebildet sind bzw. für die redundante Erfassung eines Moments mindestens zwei Sensoren vorgesehen sind und ein redundante Auswerteeinrichtung zur redundanten Auswertung vorgesehen ist.

Die DE 10 2006 004 283 A1 beschreibt eine Kalibrierungsvorrichtung zum Kalibrieren von Kraft-Momenten-Sensoren, mit einer mit dem zu kalibrierenden Sensor verbundenen Kalibriermasse und einer mit dem zu kalibrierenden Sensor verbundenen Auswerteeinrichtung zur Aufnahme der vom Sensor beim Kalibrieren erzeugten Signale und zur Durchführung der Kalibrierung, wobei ein Manipulator zum Bewegen des Sensors vorgesehen ist.

Die DE 102 17 019 C1 offenbart einen beispielhaften Kraft-Moment-Sensor.

Aufgabe der Erfindung ist es, ein einfaches Verfahren zum Nullpunktabgleichen eines Drehmomentsensors an einem Manipulator zu schaffen.

Diese Aufgabe wird erfindungsgemäß gelöst durch ein Verfahren zum Nullpunktabgleichen eines Drehmomentsensors an einem Manipulator, der mehrere über Gelenke verbundene Glieder aufweist, wobei wenigstens ein mittels eines Antriebs bewegliches Gelenk ein erstes Glied des Manipulators mit einem zweiten Glied des Manipulators drehbar verbindet und an dieses Gelenk wenigstens ein Drehmomentsensor gekoppelt ist, welcher wenigstens einen drehmomentabhängigen Messwert liefert, aufweisend die folgenden Schritte:
- Lagern des ersten Glieds und des zweiten Glieds in einem örtlich stabilen Zustand, in dem zumindest diese beiden Glieder derart abgestützt sind, dass ein zwischen diesen Gliedern angeordnetes Gelenk eine momentenfreie Stellung einnimmt;
- Antriebslosschalten zumindest des Antriebs desjenigen Gelenks, an welches der abzugleichende Drehmomentsensor angekoppelt ist;
- Öffnen einer gegebenenfalls vorhandenen, geschlossenen Bremse desjenigen Gelenks, an welches der abzugleichende Drehmomentsensor angekoppelt ist;
- anschließendes Aufnehmen des drehmomentabhängigen Messwertes des abzugleichenden Drehmomentsensors, als Referenzwert eines drehmomentlosen Zustands des Gelenks, wobei das Lagern des ersten Glieds und des zweiten Glieds in einem örtlich stabilen Zustand dadurch erfolgt, dass dasjenige Gelenk, an dem der abzugleichende Drehmomentsensor angekoppelt ist, durch eine das Gelenk überbrückende, starre Haltevorrichtung drehmomentenfrei gestellt ist, oder dass wenigstens das erste Glied und das zweite Glied auf einer Plattform abgelegt werden.

Unter Nullpunktabgleichen kann generell ein Verfahren verstanden werden, bei dem derjenige durch einen Drehmomentsensor gelieferte, drehmomentabhängige Messwert bestimmt wird, den der Drehmomentsensor liefert, wenn kein Moment auf den Drehmomentsensor einwirkt.

Prinzipiell kann ein beispielhafter Drehmomentsensor einen ersten Flanschabschnitt aufweisen, in den ein Drehmoment eingeleitet wird, einen zweiten Flanschabschnitt aufweisen, aus dem das Drehmoment abgeleitet wird und wenigstens einen den ersten Flanschabschnitt mit dem zweiten Flanschabschnitt verbindenden Stegabschnitt aufweisen, der derart ausgebildet und/oder angeordnet ist, dass das durch den Drehmomentsensor durchgeleitete Drehmoment eine Verformung, insbesondere Biegeverformung des Stegabschnitts bewirkt. Mit dem Stegabschnitt ist wenigstens ein Dehnungsmessstreifen (DMS) derart starr verbunden, dass eine Biegung des Stegabschnitts eine Verformung des Dehnungsmessstreifens verursacht, wodurch sich ein elektrischer Widerstand eines Drahtabschnitts des Dehnungsmessstreifens proportional, insbesondere linear proportional zur Dehnung des Stegabschnitts verändert. Üblicherweise werden bis zu vier Dehnmessstreifen in einer so genannten Wheatstoneschen Brücke an eine elektrische Spannungsquelle angeschlossen, so dass an einem solchen Drehmomentsensor eine elektrische Spannung angegriffen werden kann, die proportional, insbesondere linear proportional zur Dehnung des Stegabschnitts ist. Gegebenenfalls kann der Drehmomentsensor eine dem Fachmann an sich bekannte Auswerteinrichtung aufweisen bzw. mit einer solchen Auswerteinrichtung verbunden sein, welche die abgegriffene elektrische Spannung digitalisiert und den Messwert in Form eines inkrementalen Zahlenwertes liefert. Im Falle eines solchen Drehmomentsensors ist beim Nullpunktabgleichen derjenige inkrementale Zahlenwert als Messwert zu bestimmen, welcher von der Auswerteinrichtung geliefert wird, wenn an dem Drehmomentsensor kein Drehmoment ansteht, d.h. ein Drehmoment der Größe Null ansteht.

Im Allgemeinen werden Drehmomentsensoren, welche beispielsweise eine Auswerteinrichtung wie beschrieben aufweisen, werksseitig beim Hersteller des Drehmomentsensors in einem drehmomentlosen Zustand auf einen inkrementalen Wert Null vorjustiert. Nachdem ein solcher Drehmomentsensor jedoch an einem Gelenk eines Manipulators montiert ist, kann sich aufgrund der Einbausituation, der Befestigung des Drehmomentsensors oder anderer Effekte eine immanente Spannung einstellen, welche einen von Null abweichenden inkrementalen Wert liefert, obwohl das Gelenk, an welchem der Drehmomentsensor montiert ist, tatsächlich drehmomentenlos ist. In einem solchen Fall wird steuerungstechnisch dieser abweichende inkrementale Wert als so genannter Offset-Wert in der Steuerung des den Manipulator umfassenden Roboters, insbesondere Industrieroboters, gespeichert und in allen folgenden Messungen vom tatsächlich gemessenen Wert des Drehmomentsensors subtrahiert.

Vor einer Auslieferung eines neu hergestellten Manipulators, insbesondere Roboters oder Industrieroboters, müssen folglich alle vorhandenen Drehmomentsensoren erstmalig referenziert werden, d.h. ein Nullpunktabgleich durchgeführt werden. Auch nach einer gewissen Betriebsdauer, einer Reparatur oder einer Umkonfiguration des Manipulators ist ein erneuter Nullpunktabgleich durchzuführen.

Durch ein erfindungsgemäßes Lagern des ersten Glieds und des zweiten Glieds in einem örtlich stabilen Zustand; einem Antriebslosschalten zumindest des Antriebs desjenigen Gelenks, an welches der abzugleichende Drehmomentsensor angekoppelt ist; und ein Öffnen einer gegebenenfalls vorhandenen, geschlossenen Bremse desjenigen Gelenks, an welches der abzugleichende Drehmomentsensor angekoppelt ist, wird vor einem Aufnehmen des Messwertes von dem Drehmomentsensor sichergestellt, dass das betreffende Gelenk tatsächlich vollständig momentenfrei ist.

Mittels des erfindungsgemäßen Verfahrens kann gegebenenfalls die Genauigkeit der Nullpunktbestimmung des Drehmomentsensors erhöht bzw. verbessert werden. Die Reproduzierbarkeit der Momentfreistellung am betreffenden Gelenk kann verbessert werden, insbesondere da Störeinflüsse, wie beispielsweise die Abhängigkeit der Messgenauigkeit von der Anfahrrichtung im Gelenk vermindert oder sogar ganz beseitigt werden. Eine bereits am Handflansch des Manipulatorarms montierte Last kann daran auch während der Messung bzw. während des Nullpunktabgleichs verbleiben. Zum Nullpunktabgleichen bzw. zur Messung im momentfreien Zustand des Gelenks kann eine Referenzpose des Manipulatorarms freier gewählt werden, als es mit den bekannten Methoden möglich ist.

Üblicherweise sind die Gelenke eines Manipulators, insbesondere eines Industrieroboters aus Sicherheitsgründen stets mit einer jeweiligen Gelenksbremse versehen, so dass es bei Vorhandensein von Bremsen an den Gelenken des Manipulators stets erforderlich sein wird, diese Bremsen zu lösen, bevor ein Aufnehmen des Messwertes von dem Drehmomentsensor erfolgen kann. Ist jedoch in besonderen Fällen ein Gelenk oder sind mehrere Gelenke ohne Bremsen ausgebildet, so entfällt der Verfahrensschritt des Öffnens einer gegebenenfalls vorhandenen, geschlossenen Bremse zumindest desjenigen Gelenks, an welches der abzugleichende Drehmomentsensor angekoppelt ist. Selbstredend kann dieser Verfahrensschritt bei einem Bremsen aufweisenden Manipulator auch dann entfallen, wenn die betroffene Bremse aus anderen Gründen bereits geöffnet ist.

Unter Lagern eines ersten und zweiten Glieds in einem örtlich stabilen Zustand kann im Rahmen der Erfindung verstanden werden, dass zumindest diese beiden Glieder eine Lagerung erfahren, d.h. derart abgestützt sind, dass ein zwischen diesen Gliedern angeordnetes Gelenk eine momentenfreie Stellung einnimmt. Dies muss nicht zwingend bedeuten, dass sowohl das erste Glied, als auch das zweite Glied jeweils separat und direkt ortsfest starr befestigt ist. Vielmehr kann beispielsweise das eine Glied über das Gelenk hinweg von dem anderen Gelenk herunterhängen, oder es können sich die beiden Glieder auch gegeneinander abstützen, oder durch separate Haltevorrichtung direkt oder indirekt abgestützt sein. Insbesondere kann lediglich ein einziges erstes Glied gelagert sein, beispielsweise an einer Wand bzw. Decke eines Gebäudes mittelbar oder unmittelbar befestigt sein, während zumindest ein weiteres zweites Glied, welches mit dem ersten Glied mittels des Gelenkes verbunden ist, nicht gelagert ist, sondern frei schwenkbar ist, insbesondere durch Einwirken der Schwerkraft. Für den Fall, dass das zweite Glied sich entsprechend des Einwirkens der Schwerkraft ausgerichtet hat, wirken an dem Gelenk zwischen dem ersten und zweiten Glied keine Drehmomente. Mit anderen Worten kann das Lagern des zweiten Gliedes durch das Gelenk erfolgen, wenn das zweite Glied sich in einem stabilen Zustand bzw. einer stabilen Position, beispielsweise durch Einwirken der Schwerkraft befindet. Der stabile Zustand kann sich dadurch auszeichnen, dass der Massenschwerpunkt des zweiten Gliedes unterhalb des Gelenkes befindet.

Unter Antriebslosschalten kann im Rahmen der Erfindung verstanden werden, dass zumindest derjenige Antrieb, der ausgebildet ist, dasjenige Gelenk, welchem der abzugleichende Drehmomentsensor zugeordnet ist, in einem programmgesteuerten Betrieb des Manipulators automatisch zu bewegen, abgeschaltet ist, strom- bzw. spannungslos geschaltet ist und/oder derart geregelt wird, dass kein Drehmoment von dem Antrieb in das Gelenk eingeleitet wird.

Ein Aufnehmen des drehmomentabhängigen Messwertes des abzugleichenden Drehmomentsensors kann im Rahmen der Erfindung ein manuelles oder automatisches, insbesondere programmgesteuertes Messen, insbesondere elektrisches Messen an dem Drehmomentsensor sein. Ein solches Aufnehmen kann ein Anzeigen des Messwertes, ein Speichern des Messwertes und/oder ein Umwandeln des gemessenen Messwertes in eine andere physikalische Größe und/oder einen anderen Wert umfassen. All dies kann in einer dem Drehmomentsensor zugeordneten, insbesondere in einer zusammen mit dem Drehmomentsensor als Baueinheit oder Baugruppe integriert ausgebildeten Auswertelektronik erfolgen und/oder getrennt vom Drehmomentsensor in einer separaten Steuerung, insbesondere in einer den Manipulator steuernden Robotersteuerung.

In einer Ausführung der Erfindung kann außer dem ersten Glied und dem zweiten Glied mindestens auch ein weiteres Glied, insbesondere alle Glieder des Manipulators in einem örtlich stabilen Zustand gelagert werden und ein Aufnehmen des drehmomentabhängigen Messwertes kann dabei an jedem zwischen zwei örtlich stabil gelagerten Glieder angeordneten Gelenk separat erfolgen, an welchen Gelenken ein jeweils abzugleichender Drehmomentsensor einzeln, insbesondere unabhängig angekoppelt ist.

So kann ein Manipulator, insbesondere ein Industrieroboter, beispielsweise sechs oder sieben motorisch antreibbare Gelenke aufweisen, wobei insbesondere jedem Gelenk ein eigener Drehmomentsensor zugeordnet ist. Der Manipulator kann als ein Knickarmroboter konfiguriert sein, d.h. diese beispielsweise sechs oder sieben motorisch antreibbaren Gelenke können in einer kinematischen Kette seriell hintereinander angeordnet sein. Mit anderen Worten wechseln sich Glieder und Gelenke eines solchen Manipulatorarms in einer abwechselnden Reihenfolge ab. In einer speziellen Ausgestaltung dieser Ausführungsvariante werden sämtliche Glieder des Manipulators, d.h. der gesamte Manipulatorarm in einem örtlich stabilen Zustand gelagert. Ein Anfangsglied einer solchen kinematischen Kette kann beispielsweise ein Grundgestell oder ein Basisglied des Manipulatorarms sein, mit welchem der Manipulatorarm beispielsweise auf einem Boden einer Werkshalle, auf einem Arbeitstisch, einer Raumseitenwand, einer Decke oder einem Portalgestell befestigt ist. Alle weiteren Glieder werden dann beispielsweise durch ablegen, aufhängen oder hängen lassen in einem örtlich stabilen Zustand gelagert. Ein Aufnehmen des drehmomentabhängigen Messwertes kann insbesondere an jedem Drehmomentsensor separat, d.h. einzeln erfolgen.

Generell kann ein erfindungsgemäßes Verfahren in allen Varianten auch an zwei oder mehreren Momentsensoren erfolgen, die demselben Gelenk zugeordnet sind. Dies kann beispielsweise dann der Fall sein, wenn die Momente an dem jeweiligen Gelenk in sicherer Technik, d.h. redundant und/oder diversitär zu bestimmen sind, wobei zwei oder mehrere, baugleiche oder verschiedenartige Momentsensoren an dasselbe Gelenk angekoppelt sind.

In einer weiterführenden Ausgestaltung eines erfindungsgemäßen Verfahrens kann nach einem Lagern des ersten Glieds und des zweiten Glieds in einem örtlich stabilen Zustand und vor einem Aufnehmen des drehmomentabhängigen Messwertes des abzugleichenden Drehmomentsensors, als Referenzwert eines drehmomentlosen Zustands des Gelenks, ein gesteuertes Bewegen, insbesondere mehrfaches Reversieren zumindest desjenigen Antriebs erfolgen, der dasjenige Gelenk antreibt, an dem der abzugleichende Drehmomentsensor angekoppelt ist.

In der Grundausgestaltung des erfindungsgemäßen Verfahrens kann unmittelbar nachdem die benötigten Glieder des Manipulators örtlich stabil gelagert sind und nachdem die Antriebe antriebslos geschaltet sind und gegebenenfalls vorhandene Bremsen gelöst sind ein Aufnehmen des Messwertes an dem Drehmomentsensor erfolgen.

In der ersten alternativen Ausführung kann das Lagern des ersten Glieds und des zweiten Glieds in einem örtlich stabilen Zustand dadurch erfolgen, dass dasjenige Gelenk, an dem der abzugleichende Drehmomentsensor angekoppelt ist, durch eine das Gelenk überbrückende, starre Haltevorrichtung drehmomentenfrei gestellt ist. In dieser Ausführung werden zumindest das erste Glied und das zweite Glied, und gegebenenfalls weitere oder alle Glieder an der Haltevorrichtung befestigt, so dass die jeweils dazwischen liegenden Gelenke von außen arretiert sind und eventuell auftretende Momente allein über die Haltevorrichtung abgeleitet werden und nicht über das Gelenk.

So kann das Gelenk in einer ersten Variante dadurch drehmomentenfrei gestellt sein, dass die Haltevorrichtung das erste Glied mit dem zweiten Glied starr verbindet. Die Haltevorrichtung ist insoweit ausgebildet, allein das einzige Gelenk, an dem der Drehmomentsensor abgeglichen werden soll, drehmomentenfrei zu stellen und die weiteren Gelenke unbeachtet bleiben. Dabei kann die Haltevorrichtung eine erste Befestigungseinrichtung aufweisen, welche das erste Glied starr mit der Haltevorrichtung verbindet und eine zweite Befestigungseinrichtung aufweisen, welche das zweite Glied starr mit der Haltevorrichtung verbindet. Die Befestigungseinrichtungen können beispielsweise als die Glieder umgreifende und einklemmende Spannschellen ausgebildet sein. Alternativ können die Befestigungseinrichtungen auch Schraubverbindungen sein, welche direkt an die Glieder angeschraubt werden.

In einer zweiten Variante kann das Gelenk dadurch drehmomentenfrei gestellt sein, dass die Haltevorrichtung das am Beginn der kinematischen Kette von abwechselnden Gliedern und Gelenken angeordnete Glied mit dem am Ende der kinematischen Kette angeordnete Glied starr verbindet.

Bei der kinematischen Kette kann es sich generell in allen Ausführungen der Erfindung um eine kinematische Teilkette handeln, d.h. das am Beginn der kinematischen Kette angeordnete Glied muss nicht notwendiger Weise das allererste Glied des Manipulators sein, muss beispielsweise also nicht notwendiger Weise das Grundgestell oder ein Basisglied des Manipulatorarms sein, sondern kann ein anderes, dem ersten Glied in der kinematischen Kette noch vorgelagertes Glied sein. In gleicher Weise muss das am Ende der kinematischen Kette angeordnete Glied nicht notwendiger Weise das allerletzte Glied des Manipulators sein, muss beispielsweise also nicht der Handflansch des Manipulatorarms sein, sondern kann ein anderes, dem zweiten Glied in der kinematischen Kette nachgelagertes Glied oder eine am Handflansch befestigte Last sein. Die Haltevorrichtung kann also statt nur eines einzigen Gelenks und statt sämtlicher Gelenke des gesamten Manipulators auch nur eine reduzierte Anzahl von Gelenken überbrücken bzw. drehmomentfrei stellen.

Ergänzend kann die Haltevorrichtung ausgebildet sein, wenigstens ein weiteres in der kinematischen Kette angeordnetes Glied starr verbunden zu halten. Hier wird also zusätzlich ein drittes Glied oder werden mehrere weitere oder sogar alle Glieder des Manipulators starr mit der Haltevorrichtung verbunden, indem jedes Glied mittels einer eigenen Befestigungseinrichtung an der Haltevorrichtung starr befestigt ist.

In der zweiten alternativen Ausführung kann das Lagern des ersten Glieds und des zweiten Glieds in einem örtlich stabilen Zustand dadurch erfolgen, dass wenigstens das erste Glied und das zweite Glied auf einer Plattform abgelegt werden. Die Plattform kann generell eine starre Auflagefläche sein, auf welcher zumindest das erste Glied und das zweite Glied des Manipulatorarms abgelegt werden kann. Die Plattform kann jedoch auch zur Ablage von mehreren Gliedern oder allen Gliedern des Manipulatorarms ausgebildet sein. In einem beispielhaften Falle kann die Plattform ein einfacher Tisch sein, auf den die Glieder und Gelenke des Manipulatorarms abgelegt werden. die Plattform kann eine einzige Ebene aufweisen oder mehrere,
stufenartige Ebenen aufweisen, die je nach konstruktiver Gestalt des Manipulatorarms unterschiedlich angeordnet sein können.

Ergänzend kann die Plattform wenigstens eine elastische Auflage aufweisen, auf welcher zumindest das erste Glied und/oder das zweite Glied abgelegt wird. Die elastische Auflage kann stellenweise oder ganzflächig auf einer Oberseite der Plattform aufgebracht sein. Die elastische Auflage kann beispielsweise aus Kunststoff, insbesondere Elastomer und/oder geschäumtem Material hergestellt sein. Die elastische Auflage oder die mehreren elastischen Auflagen können in ihren Außenformen an die Gestalt der Glieder des Manipulatorarms angepasst sein.

Alle beschriebenen Varianten für das Lagern von Gliedern in einem örtlich stabilen Zustand können einzeln oder in Kombination, d.h. abwechselnd an verschiedenen Gelenken bzw. Gliedern desselben Manipulatorarms vorgesehen sein. So können beispielsweise die Glieder von ein bis drei Grundgelenken auf einer Plattform abgelegt sein und die weiteren Handgelenke des Manipulatorarms locker von der Plattform herunterhängen. Oder in einem anderen Beispiel können die ein bis drei Grundgelenke durch eine Haltevorrichtung starr befestigt sein und die weiteren Handgelenke an Zugmitteln aufgehängt gelagert sein. Entsprechend können auch andere Kombinationen in diesem Sinne erfindungsgemäß vorgesehen sein.

Mehrere beispielhafte, konkrete Anwendungsbeispiele der verschiedenen erfindungsgemäßen Verfahren zum Nullpunktabgleichen eines Drehmomentsensors an einem Manipulator sind in der nachfolgenden Beschreibung unter Bezugnahme auf die beigefügten Figuren näher erläutert. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine schematische Darstellung eines ersten Ausführungsbeispiels eines Manipulatorarms und einer Robotersteuerung;
- Fig. 2: eine schematische Darstellung eines beispielhaften Drehmomentsensors;
- Fig. 3: eine schematische Darstellung eines zweiten Ausführungsbeispiels eines Manipulatorarms in einem durch Hängen erreichten örtlich stabilen Zustand;
- Fig. 4: eine schematische Darstellung eines dritten Ausführungsbeispiels eines Manipulatorarms mit einer lediglich ein erstes Glied mit einem zweiten Glied verbindenden Haltevorrichtung zum Erreichen eines örtlich stabilen Zustands des dazwischen liegenden Gelenks;
- Fig. 5: eine schematische Darstellung des Manipulatorarms gemäß Fig. 4 mit einer ein Anfangsglied mit einem Endglied, bzw. der Last des Manipulatorarms verbindenden Haltevorrichtung;
- Fig. 6: eine schematische Darstellung eines dritten Ausführungsbeispiels eines Manipulatorarms mit einer ein Anfangsglied mit einem Endglied, bzw. der Last des Manipulatorarms verbindenden Haltevorrichtung gemäß Fig. 5 und einer Befestigungseinrichtung zum starren Verbinden eines weiteren Glieds mit der Haltevorrichtung;
- Fig. 7: eine schematische Darstellung des Manipulatorarms gemäß Fig. 6 mit einer Plattform, auf welcher Glieder und die Last des Manipulatorarms zum Erreichen eines örtlich stabilen Zustands abgelegt sind; und
- Fig. 8: eine schematische Darstellung des Manipulatorarms gemäß Fig. 6 mit einem Stützportal und davon herunterhängenden Seilschlaufen, in welche Glieder und die Last des Manipulatorarms zum Erreichen eines örtlich stabilen Zustands eingehängt sind.

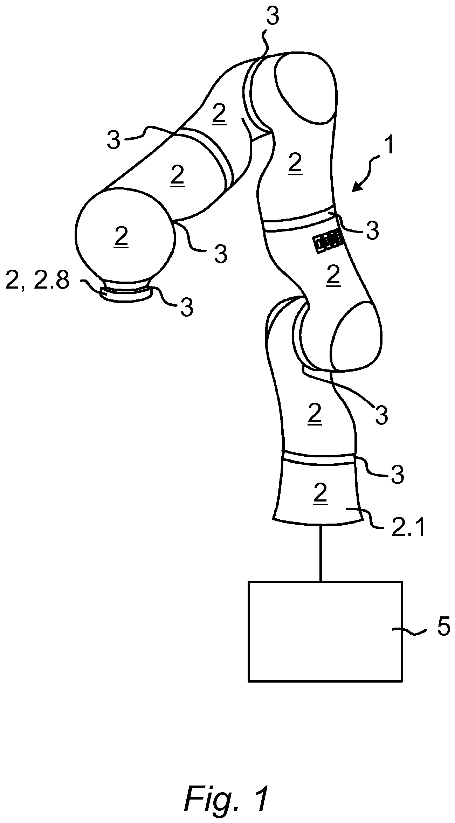

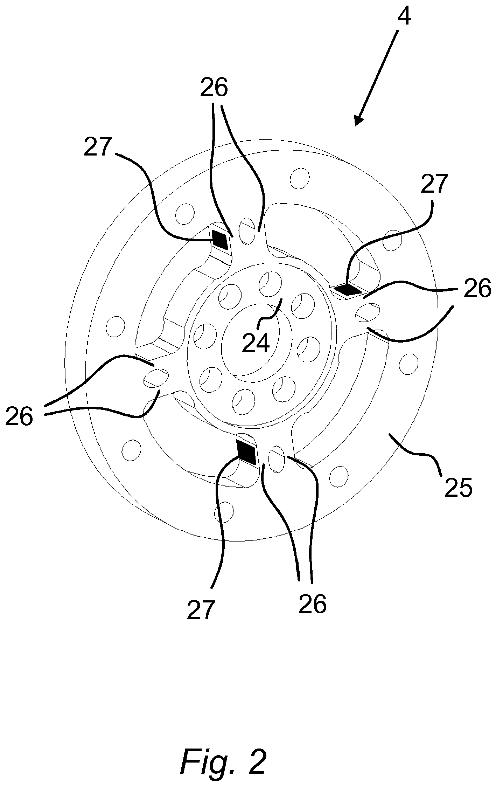

In der Fig. 1 ist ein kraft-/momentengeregelter Manipulator 1 in Bauart eines Manipulatorarmes dargestellt. Beispielhaft handelt es sich bei dem dargestellten Manipulator 1 um einen so genannten Leichtbauroboter des Typs KUKA LBR III. Der Manipulator 1 weist eine kinematische Kette von abwechselnden Gliedern 2 und Gelenken 3 auf. Das allererste Glied 2.1 bildet einen Standfuß, der auch als Gestell bezeichnet werden kann. Das allerletzte Glied 2.8 der kinematischen Kette bildet ein freies bewegliches Ende des Manipulators 1 und kann auch als Flansch bezeichnet werden. An einem solchen Flansch können Lasten, wie beispielsweise Greifer oder sonstige Werkzeuge befestigt sein. Der Manipulator 1, bzw. die Antriebe des Manipulators 1 und (in Fig. 1 nicht näher dargestellte) Momentsensoren 4 (Fig. 2) sind mit einer Robotersteuerung 5 steuerungstechnisch verbunden. Die Robotersteuerung 5 ist eingerichtet, die Gelenke des Manipulators 1 automatisch, insbesondere auf Grundlage eines Roboterprogramms gesteuert zu bewegen.

Der in Fig. 2 schematisch gezeigte Drehmomentsensor 4 kann prinzipiell einen ersten Flanschabschnitt 24 aufweisen, in den ein Drehmoment eingeleitet wird, und einen zweiten Flanschabschnitt 25 aufweisen, aus dem das Drehmoment abgeleitet wird. Im dargestellten Ausführungsbeispiel weist der Drehmomentsensor 4 vier Paare von den ersten Flanschabschnitt 24 mit dem zweiten Flanschabschnitt 25 verbindenden Stegabschnitten 26 auf, die derart ausgebildet und/oder angeordnet ist, dass das durch den Drehmomentsensor 4 durchgeleitete Drehmoment eine Verformung, insbesondere Biegeverformung der Stegabschnitte 26 bewirkt. Mit jedem Stegabschnitt 26 ist wenigstens ein Dehnungsmessstreifen 27 derart starr verbunden, dass eine Biegung des jeweiligen Stegabschnitts 26 eine Verformung des Dehnungsmessstreifens 27 verursacht, wodurch sich ein elektrischer Widerstand eines Drahtabschnitts des Dehnungsmessstreifens 27 proportional, insbesondere linear proportional zur Dehnung des zugeordneten Stegabschnitts 26 verändert.

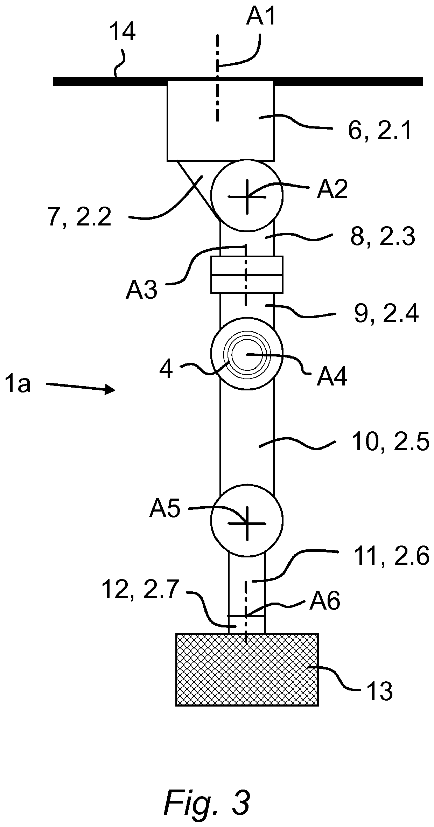

Die Fig. 3 zeigt schematisch ein zweites Ausführungsbeispiel eines Manipulatorarms 1a in einer Deckenmontage. Der Manipulatorarms 1a umfasst im Falle des vorliegenden Ausführungsbeispiels mehrere, nacheinander angeordnete und mittels Gelenke 3 verbundene Glieder 2. Bei den Gliedern 2 handelt es sich im vorliegenden Ausführungsbeispiel insbesondere um ein Gestell 6 und ein relativ zum Gestell 6 um eine vertikal verlaufende Achse A1 drehbar gelagertes Karussell 7. Weitere Glieder 2 des Manipulatorarms 1a sind im Falle des vorliegenden Ausführungsbeispiels eine Schwinge 8 und 9, ein Armausleger 10. Die Schwinge 8 und 9 ist an einem Ende an dem Karussell 7 um eine vorzugsweise horizontale Drehachse A2 schwenkbar gelagert. Am anderen Ende der Schwinge 8 und 9 ist an einer Achse A4 der Armausleger 10 schwenkbar gelagert. Dieser trägt eine Roboterhand mit ihren vorzugsweise drei weiteren Drehachsen A4, A5, A6. Am freien, d.h. in Fig. 3 am unteren Ende des Manipulatorarms 1a ist als letztes Glied ein Handflansch 12 um die Achse A6 drehbar gelagert. An dem Handflansch 12 ist eine Last 13 befestigt.

Das Lagern eines ersten beispielhaften Glieds 9, 2.4 und eines zweiten beispielhaften Glieds 10, 2.5 in einem örtlich stabilen Zustand erfolgt dadurch, dass in der kinematischen Kette der mehreren abwechselnd angeordneten Glieder 6, 7, 8, 9, 10, 11, 12 und Gelenke 3 (Achsen A1 bis A6) des Manipulators 1a, zumindest das am Beginn der kinematischen Kette angeordnete Glied 6, 2.1 ortsfest, im Falle der Fig. 3 an einer Decke 14 befestigt ist und wenigstens das Gelenk 3, an dem der abzugleichende Drehmomentsensor 4 (Fig. 2) angekoppelt ist, in der kinematischen Kette unmittelbar nachgelagerte beispielhafte Glied 10, 2.5 eine allein durch die Schwerkraft bestimmte hängende Position und Lage einnimmt. Im dargestellten Ausführungsbeispiel der Fig. 3 nehmen außerdem zumindest die Glieder 8, 2.2 und 11, 2.6 eine durch die Schwerkraft bestimmte hängende Positionen und Lage ein.

Dabei wird ein Verfahren zum Nullpunktabgleichen des Drehmomentsensors 4 an dem Gelenk 3 der Achse A4 durchgeführt, welches mittels eines Antriebs beweglich ist und das erste Glied 9, 2.4 des Manipulators 1a mit dem zweiten Glied 10, 2.5 des Manipulators 1a drehbar verbindet. Nach einem Lagern des ersten Glieds 9, 2.4 und des zweiten Glieds 10, 2.5 in einem örtlich stabilen Zustand dadurch, dass das zumindest unmittelbar nachgelagerte beispielhafte Glied 10, 2.5 eine allein durch die Schwerkraft bestimmte hängende Position und Lage einnimmt, wobei im dargestellten Ausführungsbeispiel der Fig. 3 außerdem zumindest die Glieder 8, 2.2 und 11, 2.6 eine durch die Schwerkraft bestimmte hängende Position und Lage einnehmen, erfolgt ein Antriebslosschalten zumindest des Antriebs desjenigen Gelenks 3 (Achse A4), an welches der abzugleichende Drehmomentsensor 4 angekoppelt ist. Außerdem erfolgt ein Öffnen einer gegebenenfalls vorhandenen, geschlossenen Bremse des Gelenks 3 (Achse A4), an welches der abzugleichende Drehmomentsensor 4 angekoppelt ist und anschließend erfolgt ein Aufnehmen des drehmomentabhängigen Messwertes des abzugleichenden Drehmomentsensors 4, als Referenzwert eines drehmomentlosen Zustands des Gelenks 3 (Achse A4) .
Nach einem Lagern des ersten Glieds 9, 2.4 und des zweiten Glieds 10, 2.5 in einem örtlich stabilen hängenden Zustand, wie in Fig. 3 gezeigt, und vor einem Aufnehmen des drehmomentabhängigen Messwertes des abzugleichenden Drehmomentsensors 4, als Referenzwert eines drehmomentlosen Zustands des Gelenks 3 (Achse A4), erfolgt außerdem ein gesteuertes Bewegen, insbesondere mehrfaches Reversieren zumindest desjenigen Antriebs, der dasjenige Gelenk 3 (Achse A4) antreibt, an dem der abzugleichende Drehmomentsensor 4 angekoppelt ist.

In diesem Beispiel der Fig. 3 kann anders ausgedrückt das Lagern des ersten Glieds 9, 2.4 und des zweiten Glieds 10, 2.5 in einem örtlich stabilen Zustand dadurch erfolgen, dass die Glieder 7, 2.2, 8, 2.3, 9, 2.4, 10, 2.5 und 11, 2.6 des Manipulators 1a runterhängen gelassen werden, also die Gelenke 3 sich allein durch die Schwerkraft verursacht auf eine jeweilige Gelenkwinkellage, wie in Fig. 3 gezeigt, lose einstellen bzw. einpendeln. In einem einfachsten Fall kann lediglich das erste Glied 9, 2.4, welches demjenigen Gelenk 3 (Achse A4), an dem der abzugleichende Drehmomentsensor 4 angekoppelt ist, in der kinematischen Kette unmittelbar vorgelagert ist, fest eingespannt sein und das zweite Glied 10, 2.5, welches demjenigen Gelenk 3, an dem der abzugleichende Drehmomentsensor 4 angekoppelt ist, in der kinematischen Kette unmittelbar nachgelagert ist, hängengelassen wird. Die in der kinematischen Kette auf das zweite Glied 10, 2.5 folgenden nachgelagerten Glieder 11, 2.6 und 12, 2.7 können entweder festgestellt sein, also beispielsweise durch eine eingefallene Bremse arretiert sein, oder auch durchhängen gelassen werden.

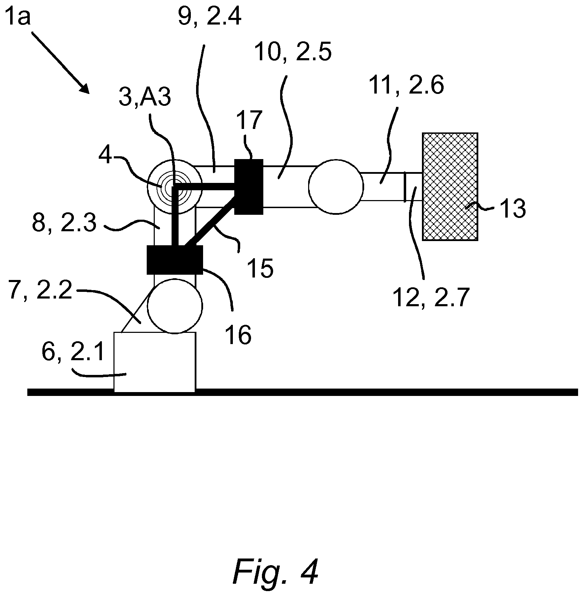

In der Ausführung gemäß Fig. 4 erfolgt das Lagern des dortigen ersten Glieds 8, 2.3 und des dortigen zweiten Glieds 9, 2.4 in einem örtlich stabilen Zustand dadurch, dass dasjenige Gelenk 3, an dem der abzugleichende Drehmomentsensor 4 angekoppelt ist, durch eine das Gelenk 3 überbrückende, starre Haltevorrichtung 15 drehmomentenfrei gestellt ist. Dabei verbindet die Haltevorrichtung 15 das dortige erste Glied 8, 2.3 mit dem dortigen zweiten Glied 9, 2.4 starr, um das Gelenk 3 (Achse A3) dadurch drehmomentenfrei zu stellen.

Die Haltevorrichtung 15 ist in der Ausführung gemäß Fig. 4 also insoweit ausgebildet, allein das Gelenk 3 der Achse A3 drehmomentenfrei zu stellen, wobei die weiteren Gelenke 3 unbeachtet bleiben, d.h. nicht drehmomentenfrei gestellt werden. Dabei kann die Haltevorrichtung 15 eine erste Befestigungseinrichtung 16 aufweisen, welche das erste Glied 8, 2.3 starr mit der Haltevorrichtung 15 verbindet und eine zweite Befestigungseinrichtung 17 aufweisen, welche das zweite Glied 9, 2.4 starr mit der Haltevorrichtung 15 verbindet. Die Befestigungseinrichtungen 16, 17 können beispielsweise als die Glieder 8, 2.3 und 9, 2.4 jeweils umgreifende und einklemmende Spannschellen ausgebildet sein.

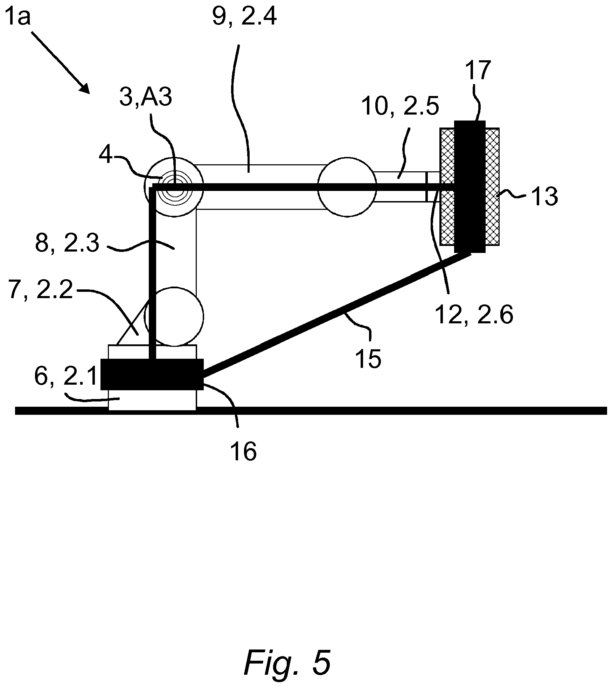

In der alternativen Ausführung gemäß Fig. 5 ist das Gelenk 3 der Achse A3 dadurch drehmomentenfrei gestellt, dass die Haltevorrichtung 15 das am Beginn der kinematischen Kette von abwechselnden Gliedern und Gelenken 3 angeordnete Glied 6, 2.1 mit der am Ende der kinematischen Kette angeordneten Last 13 starr verbindet, die fest mit dem Handflansch des Manipulators 1a verbunden ist.

In dieser Ausführung werden zumindest das dortige erste Glied 8, 2.3 und das dortige zweite Glied 9, 2.4, und gegebenenfalls weitere oder alle Glieder an der Haltevorrichtung 15 befestigt, so dass die jeweils dazwischen liegenden Gelenke 3 von außen arretiert sind und eventuell auftretende Momente allein über die Haltevorrichtung 15 abgeleitet werden und nicht über das Gelenk 3 der Achse A3.

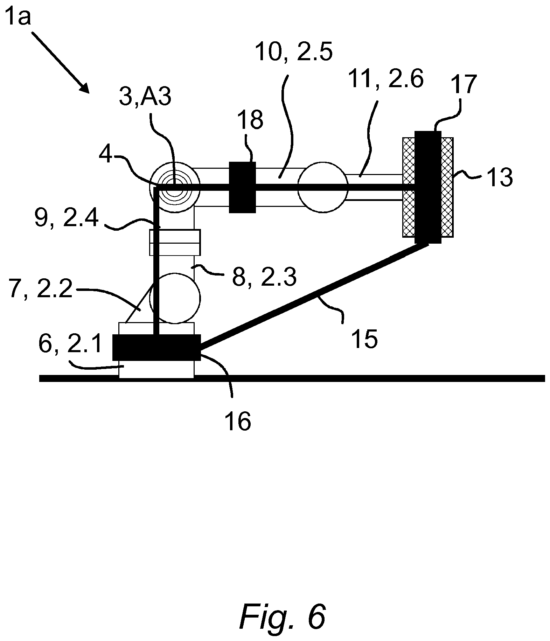

In der alternativen Ausführung gemäß Fig. 6 ist die Haltevorrichtung 15 ausgebildet, wenigstens ein weiteres in der kinematischen Kette angeordnetes Glied 10, 2.5 starr verbunden zu halten. Hier wird also zusätzlich zu den Gliedern 8, 2.3 und 9, 2.4 ein drittes Glied 10, 2.5 starr mit der Haltevorrichtung 15 verbunden, indem auch dieses dritte Glied 10, 2.5 mittels einer eigenen Befestigungseinrichtung 18 an der Haltevorrichtung 15 starr befestigt ist.

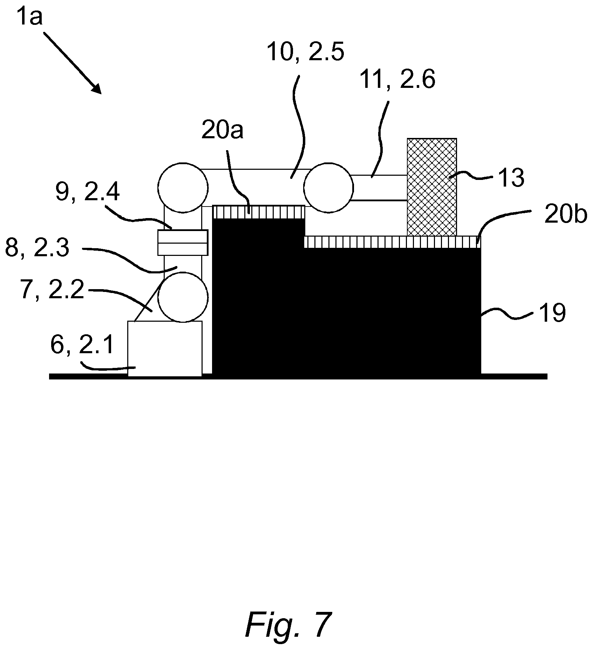

In der weiteren alternativen Ausführung gemäß Fig. 7 erfolgt das Lagern des dortigen ersten Glieds 10, 2.5 und des dortigen zweiten Glieds 11, 2.6 in einem örtlich stabilen Zustand dadurch, dass wenigstens das dortige erste Glied 10, 2.5 und das dortige zweite Glied 11, 2.6 auf einer Plattform 19 abgelegt werden.

Die Plattform 19 kann generell eine starre Auflagefläche sein, auf welcher zumindest das erste Glied 10, 2.5 und das zweite Glied 11, 2.6 des Manipulatorarms 1a abgelegt werden kann. In dem beispielhaften Falle der Fig. 7 ist die Plattform 19 ein einfacher Tisch, auf den die Glieder 10, 2.5 und 11, 2.6 und die Last 13 des Manipulatorarms 1a abgelegt werden. Die Plattform 19 kann eine einzige Ebene aufweisen oder wie in Figur 7 dargestellt mehrere, d.h. zwei stufenartige Ebenen aufweisen, die je nach konstruktiver Gestalt des Manipulatorarms 1a unterschiedlich angeordnet sein können. Ergänzend kann die Plattform 19 wenigstens eine elastische Auflage 20a, 20b aufweisen, auf welcher zumindest das erste Glied 10, 2.5 und/oder das zweite Glied 11, 2.6 abgelegt wird. Die elastische Auflagen 20a, 20b können stellenweise oder, wie in Fig. 7 gezeigt, ganzflächig auf einer Oberseite der Plattform 19 aufgebracht sein.

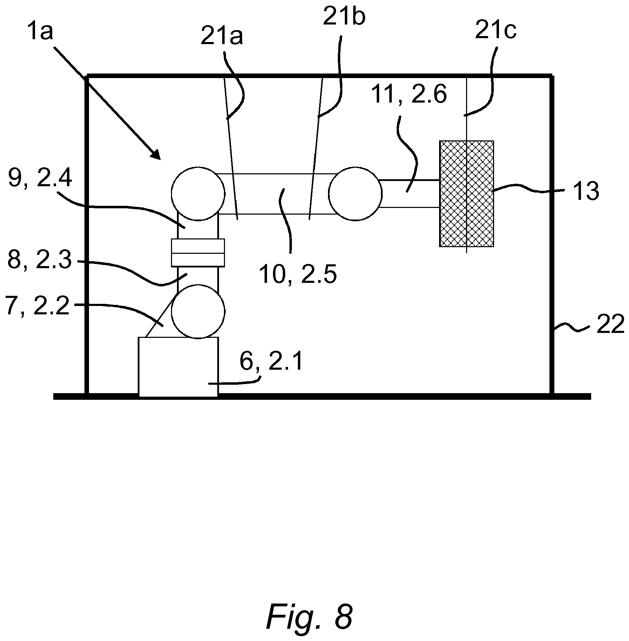

In dem weiteren Beispiel gemäß Fig. 8 erfolgt das Lagern des dortigen ersten Glieds 10, 2.5 und des dortigen zweiten Glieds 11, 2.6 in einem örtlich stabilen Zustand dadurch, dass das dortige erste Glied 10, 2.5 und das dortige zweite Glied 11, 2.6 durch Zugmittel 21a, 21b, 21c aufgehängt gelagert sind.

Das Zugmittel 21a, 21b, 21c kann ein oder mehrere Seile, Drähte, Litzen, Ketten und/oder ein oder mehrere Stangen umfassen, welche wie in Fig. 8 dargestellt an einem Stützrahmen 22 befestigt sind und von dort herunterhängen. All diese genannten Zugmittel 21a, 21b, 21c können auch in beliebigen Kombinationen zur Anwendung kommen. Im Falle des vorliegenden Beispiels sind die Zugmittel 21a, 21b, 21c um das Glied 10, 2.5 und 11, 2.6 und die Last 13 geschlungen, als Schlaufen ausgebildet, in welche das Glied 10, 2.5 und 11, 2.6 und die Last 13 eingehängt wird. Dabei kann das Glied 10, 2.5 und 11, 2.6 und die Last 13 vollständig in die Schlaufe eingeführt und darin aufgehängt werden.

## Patentansprüche

1. Verfahren zum Nullpunktabgleichen eines Drehmomentsensors (4) an einem Manipulator (1, 1a), der mehrere über Gelenke (3) verbundene Glieder (2) aufweist, wobei wenigstens ein mittels eines Antriebs bewegliches Gelenk (3) ein erstes Glied (9, 2.4) des Manipulators (1, 1a) mit einem zweiten Glied (10, 2.5) des Manipulators (1, 1a) drehbar verbindet und an dieses Gelenk (3) wenigstens ein Drehmomentsensor (4) gekoppelt ist, welcher wenigstens einen drehmomentabhängigen Messwert liefert, aufweisend die folgenden Schritte:
- Lagern des ersten Glieds (9, 2.4) und des zweiten Glieds (10, 2.5) in einem örtlich stabilen Zustand, in dem zumindest diese beiden Glieder derart abgestützt sind, dass ein zwischen diesen Gliedern angeordnetes Gelenk eine momentenfreie Stellung einnimmt;
- Antriebslosschalten zumindest des Antriebs desjenigen Gelenks (3), an welches der abzugleichende Drehmomentsensor (4) angekoppelt ist;
- Öffnen einer gegebenenfalls vorhandenen, geschlossenen Bremse desjenigen Gelenks (3), an welches der abzugleichende Drehmomentsensor (4) angekoppelt ist;
- anschließendes Aufnehmen des drehmomentabhängigen Messwertes des abzugleichenden Drehmomentsensors (4), als Referenzwert eines drehmomentlosen Zustands des Gelenks, **dadurch gekennzeichnet, dass** das Lagern des ersten Glieds (9, 2.4) und des zweiten Glieds (10, 2.5) in einem örtlich stabilen Zustand dadurch erfolgt, dass dasjenige Gelenk (3), an dem der abzugleichende Drehmomentsensor (4) angekoppelt ist, durch eine das Gelenk (3) überbrückende, starre Haltevorrichtung (15) drehmomentenfrei gestellt ist, oder dass wenigstens das erste Glied (9, 2.4) und das zweite Glied (10, 2.5) auf einer Plattform (19) abgelegt werden.

2. Verfahren nach Anspruch 1, bei dem außer dem ersten Glied (9, 2.4) und dem zweiten Glied (10, 2.5) mindestens auch ein weiteres Glied (7, 2.2, 8, 2.3, 11, 2.6), insbesondere alle Glieder (7, 2.2, 8, 2.3, 9, 2.4, 10, 2.5, 11, 2.6) des Manipulators (1, 1a) in einem örtlich stabilen Zustand gelagert werden und ein Aufnehmen des drehmomentabhängigen Messwertes an jedem zwischen zwei örtlich stabil gelagerten Gliedern (7, 2.2, 8, 2.3, 9, 2.4, 10, 2.5, 11, 2.6) angeordneten Gelenk (3) separat erfolgt, an welchen Gelenken (3) ein jeweils abzugleichender Drehmomentsensor (4) einzeln, insbesondere unabhängig angekoppelt ist.

3. Verfahren nach Anspruch 1 oder 2, bei dem das Gelenk (3) dadurch drehmomentenfrei gestellt ist, dass die Haltevorrichtung (15) das erste Glied (9, 2.4) mit dem zweiten Glied (10, 2.5) starr verbindet.

4. Verfahren nach Anspruch 1 oder 2, bei dem das Gelenk (3) dadurch drehmomentenfrei gestellt ist, dass die Haltevorrichtung (15) das am Beginn der kinematischen Kette von abwechselnden Gliedern (2) und Gelenken (3) angeordnete Glied (2.1) mit dem am Ende der kinematischen Kette angeordnete Glied (12, 2.7) starr verbindet.

5. Verfahren nach Anspruch 4, bei dem die Haltevorrichtung (15) ausgebildet ist, wenigstens ein weiteres in der kinematischen Kette angeordnetes Glied (7, 2.2, 8, 2.3, 9, 2.4, 10, 2.5, 11, 2.6) starr verbunden zu halten.

6. Verfahren nach Anspruch 1 oder 2, bei dem die Plattform (19) wenigstens eine elastische Auflage (20a, 20b) aufweist, auf welcher das erste Glied (9, 2.4) und/oder das zweite Glied (10, 2.5) abgelegt wird.

## Claims

1. Method for adjusting the zero point of a torque sensor (4) on a manipulator (1, 1a), which has a plurality of links (2) connected by joints (3), wherein at least one joint (3), which can be moved by means of a drive, rotatably connects a first link (9, 2.4) of the manipulator (1, 1a) to a second link (10, 2.5) of the manipulator (1, 1a) and at least one torque sensor (4) is coupled to said joint (3), which torque sensor supplies at least one torque-dependent measurement, comprising the following steps:
- supporting the first link (9, 2.4) and the second link (10, 2.5) in a locally stable state, in which at least both said links are supported such that a joint arranged between said links adopts a torque-free position;
- drivelessly switching at least the drive of the particular joint (3) to which the torque sensor (4) to be adjusted is coupled;
- opening a possibly provided, closed brake of the particular joint (3) to which the torque sensor (4) to be adjusted is coupled;
- subsequently recording the torque-dependent measurement of the torque sensor (4) to be adjusted as a reference value of a torque-free state of the joint,
**characterised in that** the support of the first link (9, 2.4) and the second link (10, 2.5) in a locally stable state is performed **in that** the particular joint (3) to which the torque sensor (4) to be adjusted is coupled is set to be torque-free by a rigid holding device (15) bridging the joint (3), or **in that** at least the first link (9, 2.4) and the second link (10, 2.5) are placed on a platform (19).

2. Method according to claim 1, wherein apart from the first link (9, 2.4) and the second link (10, 2.5) also at least one additional link (7, 2.2, 8, 2.3, 11 , 2.6), in particular all links (7, 2.2, 8, 2.3, 9, 2.4, 10, 2.5, 11, 2.6), of the manipulator (1, 1a) are supported in a locally stable state and the recording of the torque-dependent measurement at each joint (3) arranged between two locally stable links (7, 2.2, 8, 2.3, 9, 2.4, 10, 2.5, 11, 2.6) is performed separately, to which joints (3) a torque sensor (4) to be adjusted respectively is coupled individually, in particular independently.

3. Method according to claim 1 or 2, wherein the joint (3) is set to be torque-free in that the holding device (15) rigidly connects the first link (9, 2.4) to the second link (10, 2.5).

4. Method according to claim 1 or 2, wherein the joint (3) is set to be torque-free in that the holding device (15) rigidly connects the link (2.1) arranged at the beginning of the kinematic chain of alternate links (2) and joints (3) to the link (12, 2.7) arranged at the end of the kinematic chain.

5. Method according to claim 4, wherein the holding device (15) is designed to keep rigidly connected at least one additional link (7, 2.2, 8, 2.3, 9, 2.4, 10, 2.5, 11, 2.6) arranged in the kinematic chain.

6. Method according to claim 1 or 2, wherein the platform (19) has at least one elastic support (20a, 20b), on which the first link (9, 2.4) and/or the second link (10 , 2.5) is placed.

## Revendications

1. Procédé pour ajuster à zéro un capteur de couple (4) sur un manipulateur (1, 1a) qui présente plusieurs membres (2) reliés par l'intermédiaire d'articulations (3), au moins une articulation (3) mobile au moyen d'un entraînement reliant en rotation un premier membre (9, 2.4) du manipulateur (1, 1a) à un deuxième membre (10, 2.5) du manipulateur (1, 1a) et à cette articulation étant accouplé au moins un capteur de couple (4) qui fournit au moins une valeur de mesure en fonction du couple, présentant les étapes suivantes :
- installer le premier membre (9, 2.4) et le deuxième membre 10, 2.5) dans un état localement stable dans lequel au moins ces deux membres sont soutenus de telle sorte qu'une articulation agencée entre ces membres prend une position libre de couple ;
- actionner sans entraînement au moins l'entraînement de l'articulation (3) à laquelle le capteur de couple (4) à ajuster est accouplé ;
- ouvrir un frein fermé éventuellement présent de l'articulation (3) à laquelle le capteur de couple (4) à ajuster est accouplé ;
- recevoir ensuite la valeur de mesure en fonction du couple du capteur de couple (4) à ajuster en tant que valeur de référence d'un état exempt de couple de l'articulation, **caractérisé en ce que** l'installation du premier membre (9, 2.4) et du deuxième membre (10, 2.5) dans un état localement stable est effectuée par le fait que l'articulation (3), à laquelle le capteur de couple (4) à ajuster est accouplé, est rendue libre de couple par un dispositif de maintien (15) rigide surmontant l'articulation (3) ou **en ce qu'**au moins le premier membre (9, 2.4) et le deuxième membre (10, 2.5) sont posés sur une plateforme (19).

2. Procédé selon la revendication 1, dans lequel à part le premier membre (9, 2.4) et le deuxième membre (10, 2.5), au moins un autre membre (7, 2.2, 8, 2.3, 11, 2.6) en particulier tous les membres (7, 2.2, 8, 2.3, 9, 2.4, 10, 2.5., 11, 2.6) du manipulateur (1, 1a) sont aussi installés dans un état localement stable, et une réception de la valeur de mesure en fonction du couple sur chaque articulation (3) agencée entre deux membres (7, 2.2, 8, 2.3, 9, 2.4, 10, 2.5., 11, 2.6) de manière localement stable est effectuée séparément, un capteur de couple (4) à ajuster respectivement étant accouplé de manière individuelle, en particulier de manière indépendante à ces articulations (3).

3. Procédé selon la revendication 1 ou 2, dans lequel l'articulation (3) est rendue libre de couple par le fait que le dispositif de maintien (15) relie de manière rigide le premier membre (9, 2.4) au deuxième membre (10, 2.5).

4. Procédé selon la revendication 1 ou 2, dans lequel l'articulation (3) est rendue libre de couple par le fait que le dispositif de maintien (15) relie de manière rigide le membre (2.1) agencé au début de la chaîne cinématique de membres (2) et de membres (3) alternés avec le membre (12, 2.7) agencé à la fin de la chaîne cinématique.

5. Procédé selon la revendication 4, dans lequel le dispositif de maintien (15) est réalisé pour maintenir relié de manière rigide un autre membre (7, 2.2, 8, 2.3, 9, 2.4, 10, 2.5, 11, 2.6) agencé dans la chaîne cinématique.

6. Procédé selon la revendication 1 ou 2, dans lequel la plateforme (19) présente au moins une surface portante (20a, 20b) élastique sur laquelle le premier membre (9, 2.4) et/ou le deuxième (10, 2.5) est posé.
